# EUROPÄISCHE PATENTANMELDUNG

(11) **EP 0 978 408 A2**
(43) Veröffentlichungstag der Anmeldung: **09.02.2000**
(21) Anmeldenummer: 99109907.8
(22) Anmeldetag: 20.05.1999
(51) Int. Cl.: B60K 35/00

(54) **Anzeigeinstrument**

(30) Priorität: 04.08.1998 DE 19835208
(71) Anmelder: Mannesmann VDO Aktiengesellschaft, 60388 Frankfurt am Main (DE)
(72) Erfinder: Ghesla, Jürgen, 6971 Hard (AT)
(74) Vertreter: Klein, Thomas, Dipl.-Ing.

(57) **Zusammenfassung**

Bei einem Anzeigeinstrument (1) dient ein in einer Nut (13) geführter Zugkörper (12) der Fixierung in einer Ausnehmung (9) einer Armaturentafel (10). Hierbei wird eine Erweiterung (14) des Zugkörpers (12) gegen die Rückseite der Armaturentafel (10) verspannt, wobei der Zugkörper (12) mittels eines lösbaren Klemmkörpers (15) fixiert ist. Der überstehende Teil des beispielsweise als Kabelbinder (11) ausgeführten Zugkörpers (12) wird abgetrennt und die Trennstelle mittels eines Zierringes (8) abgedeckt. Durch diese Ausführungsform ist das Anzeigeinstrument (1) mit sehr geringem Aufwand in beliebigen Armaturentafeln (10) fixierbar, wobei durch die gleichmäßige Anpressung ein besonders guter Schutz gegen Eindringen von Feuchtigkeit erreicht wird.

## Beschreibung

Die Erfindung betrifft ein Anzeigeinstrument für ein Fahrzeug, welches in eine Ausnehmung einer Armaturentafel einsetzbar ist und mittels eines von der Vorderseite des Anzeigeinstrumentes aus zu betätigenden Fixiermittels mit der Armaturentafel verbindbar ist.

Solche Anzeigeinstrumente werden vor allem zum nachträglichen Einbau in vorhandene Armaturentafeln eingesetzt, beispielsweise um die serienmäßige Ausstattung zu ergänzen. Dies trifft neben Automobilen vor allem auch auf Wasserfahrzeuge, wie beispielsweise Segel- oder Motoryachten zu, die häufig entsprechend der am Markt verfügbaren Technik nachgerüstet werden.

Zur Montage des Anzeigeinstrumentes muss zunächst eine entsprechende Ausnehmung in der Armaturentafel erzeugt werden. Anschließend wird das Anzeigeinstrument von der dem Betrachter zugewandten Seite in die Ausnehmung eingesetzt, wobei das beispielsweise als Clipsverbindung ausgeführte Fixiermittel den Rand der Ausnehmung umgreift und auf der Rückseite verrastet. Nachteilig bei den so ausgeführten Anzeigeinstrumenten wirkt sich aus, dass die Qualität der Verbindung vor allem von der Genauigkeit der Ausnehmung abhängt. Insbesondere besteht bei nachlässig montierten Anzeigeinstrumenten die Gefahr, dass zwischen dem Anzeigeinstrument und der Armaturentafel Staub und Feuchtigkeit eindringen kann. Die für eine zuverlässige Verbindung erforderliche Genauigkeit ist daher relativ hoch.

Weiterhin wirkt sich nachteilig aus, dass zusätzlich bei der Montage auch die Stärke der Armaturentafel berücksichtigt werden muss. Lediglich bei einer auf die Clipsverbindung abgestimmten Dicke der Armaturentafel lässt sich das Anzeigeinstrument so fixieren, dass dieses gegen die Armaturentafel gleichmäßig anliegt. Dabei wirken sich die genannten Nachteile bei Anzeigeinstrumenten, die Umwelteinflüssen in hohem Maße ausgesetzt sind, besonders ungünstig aus, da hierbei das Eindringen von Spritzwasser oder Fremdkörpern zu einem Kurzschluss der Elektrik führen kann.

Es ist bereits daran gedacht worden, das Gehäuse des Anzeigeinstrumentes zweiteilig auszuführen, wobei zunächst ein Ring auf der Armaturentafel aufgeschraubt und anschließend das Anzeigeinstrument in den Ring eingesetzt und mit diesem verschraubt wird. Der Ring liegt dabei flächig gegen die Armaturentafel an und ermöglicht daher eine ausreichende Abdichtung gegenüber der Armaturentafel. Nachteilig hierbei wirkt sich aus, dass zum Verschrauben des Ringes mit der Armaturentafel eine Reihe von Bohrungen an der Armaturentafel erforderlich sind. Dies ist jedoch je nach Material und Gestaltung der Armaturentafel neben einem hohen Montageaufwand unter Umständen auch mit einer Beschädigung der Armaturentafel verbunden, wobei möglicherweise auch spezielles Werkzeug erforderlich ist. Beispielsweise kann es zur Ablösung empfindlicher Beschichtungen oder auch zur Verformung der Armaturentafel kommen. Armaturentafeln aus Holz erfordern zudem weitere Schutzmaßnahmen gegen Witterungseinflüsse im Bereich der Schnittkanten und der Bohrungen.

Der Erfindung liegt das Problem zugrunde, ein Anzeigeinstrument der genannten Art so auszuführen, dass es besonders einfach montiert werden kann. Weiterhin soll das Anzeigeinstrument auch bei unterschiedlich starken Armaturentafeln mit gleichmäßigem Druck gegen die Armaturentafel anliegen.

Dieses Problem wird erfindungsgemäß dadurch gelöst, dass das Fixiermittel einen an der Rückseite der Armaturentafel zu haltenden und mittels eines Klemmkörpers fixierbaren Zugkörper hat. Hierdurch erfolgt die Fixierung des Anzeigeinstrumentes nach dem Einsetzen in die Ausnehmung durch relative Verschiebung des Zugkörpers gegenüber dem Anzeigeinstrument, wobei die Armaturentafel eingeschlossen wird. Dabei wird eine gleichmäßige Auflage des Anzeigeinstrumentes gegen die Außenseite der Armaturentafel erreicht. Der Zugkörper kann dabei leicht von Hand angezogen werden, so dass keinerlei Werkzeuge erforderlich sind. Der Klemmkörper kann entweder so ausgeführt sein, dass er ein Lösen des Zugkörpers nach dem Fixieren selbsttätig verhindert oder dass der Klemmkörper zur Fixierung manuell betätigt werden muss.

Das erfindungsgemäße Anzeigeinstrument eignet sich aufgrund seiner einfachen Montage, für die es zudem keiner (Spezial-)Werkzeuge bedarf, vorteilhaft sowohl für einen nachträglichen Einbau in eine Armaturentafel als auch für eine Verwendung zur Erstausrüstung der Armaturentafel.

Hierbei ist eine Weiterbildung der Erfindung besonders vorteilhaft, bei der das Anzeigeinstrument mittels des Zugkörpers gegen die Armaturentafel vorspannbar ist. Hierdurch kann das Eindringen von Feuchtigkeit oder Schmutzpartikeln in den Spalt zwischen Anzeigeinstrument und Ausnehmung wirkungsvoll verhindert werden. Insbesondere kann dabei eine zwischen dem Anzeigeinstrument und der Armaturentafel angeordnete Dichtung komprimiert werden und so die Dichtigkeit weiter verbessert werden.

Der Zugkörper könnte beispielsweise ein mit Klappflügeln versehener Metallkörper sein, der mittels des Klemmkörpers fixiert wird. Besonders einfach ist hingegen eine Weiterbildung der Erfindung, wenn der Zugkörper ein elastisches Spannband ist. Dieses flexible Spannband kann zur Montage zunächst soweit in das Anzeigeinstrument eingeschoben werden, dass dieses über die Rückseite des Anzeigeinstrumentes hinaus reicht und daher beim Einsetzen des Anzeigeinstrumentes in die Ausnehmung nicht stört. Beim Fixieren des Spannbandes gleitet das Spannband entlang des Umfanges des Anzeigeinstrumentes nach außen, bis das Spannband an der Armaturentafel gehalten wird. Zugleich lässt sich durch die elastische Ausführung eine Vorspannung des Anzeigeinstrumentes erreichen, die für den Bediener beim Erreichen der maximalen Anpresskraft als spürbare Dehnung zu erkennen ist.

Besonders vorteilhaft ist eine Weiterbildung der Erfindung ausgeführt, wenn der Zugkörper gegen einen rückseitigen Rand der Ausnehmung anlegbar ist. Der Zugkörper ist hierzu derart ausgeführt, dass er bei der Montage problemlos zusammen mit dem Anzeigeinstrument durch die Ausnehmung einsetzbar ist und anschließend so weit in Richtung der Vorderseite des Anzeigeinstrumentes verschoben wird, bis er beispielsweise mit einem Anschlag gegen den Rand der Ausnehmung anliegt und dort gehalten wird.

Ebenso kann das Spannmittel formschlüssig in rückseitig angeordnete Haltemittel der Armaturentafel eingesetzt werden.

Hierbei ist es besonders günstig, wenn der Zugkörper eine keilförmige Erweiterung hat, welche gegen den Rand der Ausnehmung anlegbar ist. Hierdurch wird eine Fixierung des Anzeigeinstrumentes mit hoher Belastbarkeit erreicht, wobei insbesondere auch eine Zentrierung des Anzeigeinstrumentes in der Ausnehmung erfolgt. Zugleich wird der Spalt zwischen dem Anzeigeinstrument und der Ausnehmung durch die Erweiterung zusätzlich abgedichtet, so dass das Eindringen von Feuchtigkeit weitgehend ausgeschlossen werden kann.

Das Anzeigeinstrument könnte lediglich nach Durchtrennen des Zugkörpers aus der Ausnehmung herausnehmbar sein. Eine andere Ausführungsform der Erfindung ist jedoch dann besonders vorteilhaft gestaltet, wenn der Zugkörper mittels des Klemmkörpers lösbar fixiert ist. Dadurch kann das Anzeigeinstrument problemlos wieder entfernt werden, wobei kein Ersatz-Zugkörper beschafft werden muss. Durch die einfache Fixierung ist es auch möglich, das Anzeigeinstrument lediglich vorübergehend testweise einzusetzen oder gegen andere Anzeigeinstrumente auszutauschen.

Eine Ausführungsform der Erfindung ist dadurch besonders günstig, dass der Zugkörper mittels des Klemmkörpers formschlüssig fixierbar ist. Hierdurch lässt sich eine zuverlässige und zugleich von außen leicht zu kontrollierende Fixierung erreichen, wobei eine fehlerhafte Montage weitgehend ausgeschlossen werden kann.

Hierbei ist eine Weiterbildung besonders günstig, wenn der Zugkörper ein mit Rasten versehenes Band ist. Diese Ausführung ermöglicht eine einfache Fixierung, die für den Bediener deutlich spürbar ist und somit eine fehlerhafte Bedienung weitgehend ausschließt. Zugleich ist eine einfache Anpassung an unterschiedliche Armaturentafeln sowohl mit als auch ohne Vorspannung problemlos möglich.

Vorteilhaft ist es auch, wenn der Zugkörper ein Kabelbinder ist. Solche Kabelbinder haben sich bei unterschiedlichsten Anwendungen seit langem bewährt und zeichnen sich vor allem durch ihre einfache Bedienung und ihre hohe Belastbarkeit aus. Zugleich sind Kabelbinder mühelos und kostengünstig erhältlich und eigenen sich daher auch für Anwendungen, bei denen das Anzeigeinstrument nur durch Zerstörung des Zugkörpers aus der Ausnehmung entfernt werden kann.

Eine andere Ausführungsform ist in vorteilhafter Weise dadurch gegeben, dass der Zugkörper mittels des Spannkörpers kraftschlüssig fixierbar ist. Hierdurch lässt sich eine stufenlose und damit besonders exakte Fixierung des Anzeigeinstrumentes in der Ausnehmung der Armaturentafel erreichen. Die Montage ist vor allem bei sehr dünnen Armaturentafeln wesentlich vereinfacht, bei denen Rasten keine einwandfreie Fixierung des Anzeigeinstrumentes gestatten.

Eine besonders günstige Weiterbildung der Erfindung ist auch dann gegeben, wenn das Anzeigeinstrument gegenüber der Armaturentafel mittels einer Dichtung gedichtet ist. Hierdurch lässt sich der Schutz des Anzeigeinstrumentes gegenüber eindringender Feuchtigkeit oder Staubpartikeln weiter verbessern. Dabei dient die Dichtung zugleich dem Ausgleich von Unebenheiten der Armaturentafel, so dass ein gleichmäßiger Anpressdruck zwischen Armaturentafel und Anzeigeinstrument erreicht wird. Außerdem lässt sich so auch das optische Erscheinungsbild verbessern.

Das Einsetzen des Anzeigeinstrumentes in die Armaturentafel ist dann besonders einfach möglich, wenn der Zugkörper in eine Nut des Anzeigeinstrumentes einsetzbar ist. Hierdurch tritt der Zugkörper gegenüber dem Umfang des Anzeigeinstrumentes nicht hervor, so dass keine spezielle Anpassung der Ausnehmung erforderlich ist. Dabei dient die Nut zugleich als Führung, die ein Verkanten des Zugkörpers während der Fixierung verhindert.

Gemäß einer anderen vorteilhaften Weiterbildung der Erfindung sind mindestens zwei, über den Umfang des Anzeigeinstruments verteilt angeordnete Fixiermittel vorgesehen. Dadurch wird einen besonders sicheren Halt gewährleistend zum einen die Befestigungskraft gleichmäßig über den Umfang des Anzeigeinstruments verteilt; zum anderen ist ein Verkippen des Anzeigeinstruments in der Armaturentafel damit ausgeschlossen und eine exakte Zentrierung des Instrumentes in der Tafel sichergestellt.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer geschnittenen Seitenansicht in
- Fig. 1: ein erfindungsgemäßes Anzeigeinstrument,
- Fig. 2: einen Ausschnitt des in eine Armaturentafel eingesetzten Anzeigeinstrumentes,
- Fig. 3: das in der Armaturentafel fixierte Anzeigeinstrument.

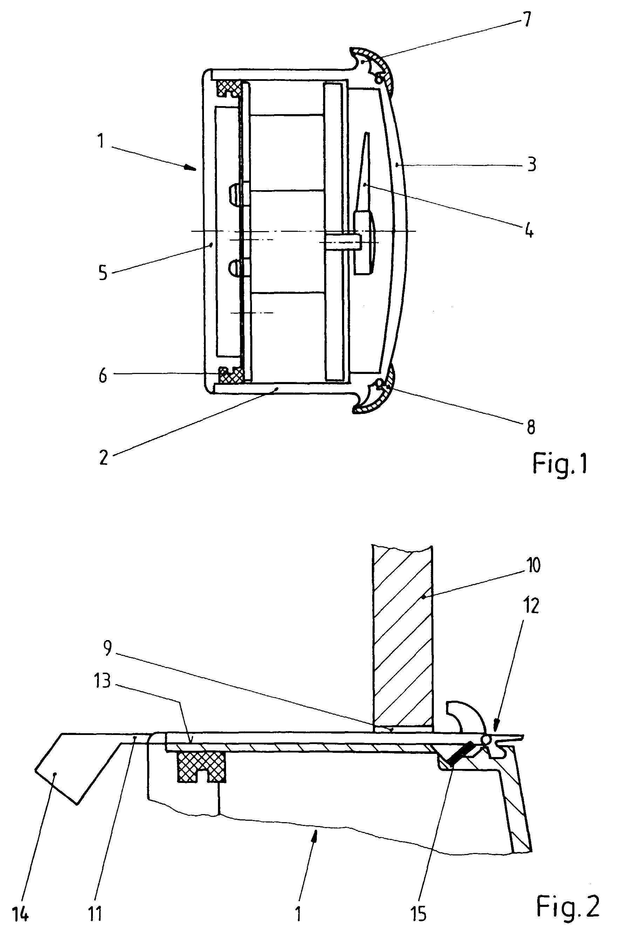

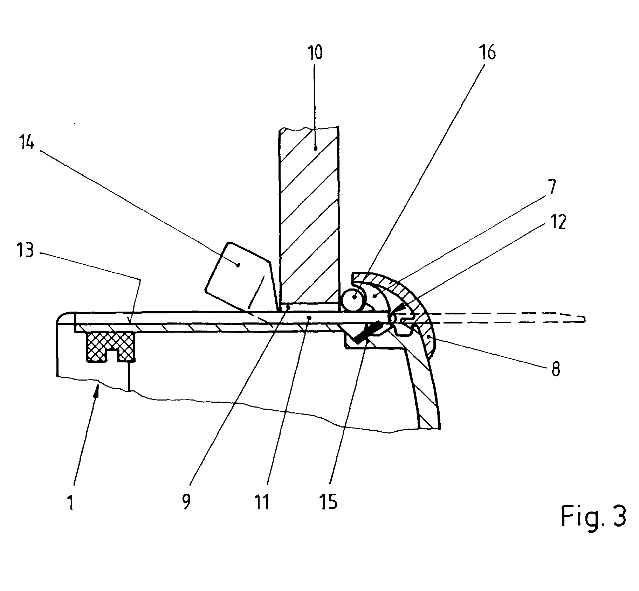

Figur 1 zeigt eine seitliche Schnittdarstellung eines erfindungsgemäßen Anzeigeinstrumentes 1. Dieses Anzeigeinstrument 1 hat ein Gehäuse 2, welches zumindest in seinem vorderen, einem Betrachter zugewandten Bereich einen transparenten Abschnitt 3 aufweist, welcher eine darunter befindliche Zeigerfahne 4 abdeckt. Das Gehäuse 2 ist rückseitig mit einem Deckel 5 verschlossen, welcher gegenüber dem Gehäuse 2 mit einer Dichtung 6 abgedichtet ist. Das Gehäuse 2 hat weiterhin einen umlaufenden und gegen eine in den Figuren 2 und 3 dargestellte Armaturentafel 10 anlegbaren Vorsprung 7, welcher von einem aufsetzbaren Zierring 8 abgedeckt ist.

Figur 2 zeigt einen Ausschnitt des Anzeigeinstrumentes 1 in einer seitlichen, vergrößerten Schnittdarstellung. Das Anzeigeinstrument 1 ist hierbei in eine Ausnehmung 9 der Armaturentafel 10 eingesetzt und zunächst noch nicht fixiert. Zu erkennen ist ein als Kabelbinder 11 ausgeführter Zugkörper 12, welcher in eine Nut 13 am Umfang des Gehäuses 2 eingesetzt ist. Der Zugkörper 12 hat an seinem hinteren Ende eine Erweiterung 14, welche gegenüber dem Umfang des Gehäuses 2 nicht hervorsteht und liegt in seinem vorderen Endabschnitt gegen einen als Federblech ausgeführten, am Gehäuse 2 angeordneten Klemmkörper 15 an. Der Zugkörper 12 springt dabei gegenüber der Vorderseite des Gehäuses 2 geringfügig hervor, so dass er leicht von einem Bediener gegriffen und gespannt werden kann. In der dargestellten Montageposition ist der in Figur 1 gezeigte Zierring 8 zunächst nicht montiert.

Figur 3 zeigt das in seiner endgültigen Lage fixierte Anzeigeinstrument 1. Hierbei ist der Zugkörper 12 entlang der Nut 13 nach vorn entsprechend der gestrichelten Darstellung geführt, wobei gleichzeitig das Anzeigeinstrument z.B. mit einer Hand gegen die Armaturentafel 10 gedrückt wird. Die Erweiterung 14 schwenkt hierbei von ihrer rückwärtigen Position nach außen und gleitet entlang des Umfanges des Anzeigeinstrumentes 1, bis die Erweiterung 14 gegen den rückwärtigen Bereich der Ausnehmung 9 der Armaturentafel 10 anliegt. Der Klemmkörper 15 verhindert dabei durch Verrasten mit nicht dargestellten Vertiefungen des Zugkörpers 12 ein unbeabsichtigtes Zurückgleiten und Lösen des als Kabelbinder 11 ausgeführten Zugkörpers 12. Weiterhin ist eine in den Vorsprung 7 eingesetzte Dichtung 16 zu erkennen, welche dem zusätzlichen Schutz des Anzeigeinstrumentes 1 gegen eindringende Feuchtigkeit dient. Zur Verbesserung des optischen Erscheinungsbildes ist der gestrichelt dargestellte Teil des Zugkörpers 12 nach der Fixierung des Anzeigeinstrumentes 1 abgetrennt und die Trennstelle mittels des aufgesetzten Zierringes 8 verdeckt. Zur Demontage des Anzeigeinstrumentes 1 wird der Klemmkörper 15 mittels eines Werkzeuges niedergehalten, so dass das Anzeigeinstrument 1 nach vorn herausgezogen werden kann.

Neben dem dargestellten Anzeigeinstrument 1 lassen sich in gleicher Weise auch andere Funktionselemente in der Armaturentafel 10 mittels des Zugkörpers 12 fixieren. Beispielsweise können dies Schaltelemente und ebenso auch Armaturenteile, beispielsweise spezielle Halterungen, sein.

## Patentansprüche

1. Anzeigeinstrument für ein Fahrzeug, welches in eine Ausnehmung einer Armaturentafel einsetzbar ist und mittels eines von der Vorderseite des Anzeigeinstrumentes aus zu betätigenden Fixiermittels mit der Armaturentafel verbindbar ist, **dadurch gekennzeichnet,** dass das Fixiermittel einen an der Rückseite der Armaturentafel (10) zu haltenden und mittels eines Klemmkörpers (15) fixierbaren Zugkörper (12) hat.

2. Anzeigeinstrument nach Anspruch 1, **dadurch gekennzeichnet,** dass das Anzeigeinstrument (1) mittels des Zugkörpers (12) gegen die Armaturentafel (10) vorspannbar ist.

3. Anzeigeinstrument nach Anspruch 1 oder 2, **dadurch gekennzeichnet**, dass der Zugkörper (12) ein elastisches Spannband ist.

4. Anzeigeinstrument nach einem der vorhergehenden Ansprüche**, dadurch gekennzeichnet,** dass der Zugkörper (12) gegen einen rückseitigen Rand der Ausnehmung (9) anlegbar ist.

5. Anzeigeinstrument nach einem der vorhergehenden Ansprüche, **dadurch gekennzeichnet**, dass der Zugkörper (12) eine keilförmige Erweiterung (14) hat, welche gegen den Rand der Ausnehmung (9) anlegbar ist.

6. Anzeigeinstrument nach einem der vorhergehenden Ansprüche, **dadurch gekennzeichnet,** dass der Zugkörper (12) mittels des Klemmkörpers (15) lösbar fixiert ist.

7. Anzeigeinstrument nach einem der vorhergehenden Ansprüche**, dadurch gekennzeichnet,** dass der Zugkörper (12) mittels des Klemmkörpers (15) formschlüssig fixierbar ist.

8. Anzeigeinstrument nach Anspruch 7**, dadurch gekennzeichnet,** dass der Zugkörper (12) ein mit Rasten versehenes Band ist.

9. Anzeigeinstrument nach einem der vorhergehenden Ansprüche, **dadurch gekennzeichnet,** dass der Zugkörper (12) ein Kabelbinder (11) ist.

10. Anzeigeinstrument nach einem der vorhergehenden Ansprüche, **dadurch gekennzeichnet,** dass der Zugkörper (12) mittels des Klemmkörpers (15) kraftschlüssig fixierbar ist.

11. Anzeigeinstrument nach einem der vorhergehenden Ansprüche**, dadurch gekennzeichnet,** dass das Anzeigeinstrument (1) gegenüber der Armaturentafel (10) mittels einer Dichtung (16) gedichtet ist.

12. Anzeigeinstrument nach einem der vorhergehenden Ansprüche, **dadurch gekennzeichnet,** dass der Zugkörper (12) in eine Nut (13) des Anzeigeinstrumentes (1) einsetzbar ist.

13. Anzeigeinstrument nach einem der vorhergehenden Ansprüche, **dadurch gekennzeichnet,** dass mindestens zwei, über den Umfang des Anzeigeinstrumentes (1) verteilt angeordnete Fixiermittel vorgesehen sind.
